Europäisches Patentamt

European Patent Office

Office européen des brevets

(19)

(11) Publication number: **0 175 712 B1**

(12) **EUROPEAN PATENT SPECIFICATION**

(45) Date of publication of patent specification: **15.04.92**    (51) Int. Cl.⁵: **F28F 25/08**, F28C 1/04

(21) Application number: **85901267.6**

(22) Date of filing: **25.02.85**

(86) International application number:
**PCT/US85/00293**

(87) International publication number:
**WO 85/04243 (26.09.85 85/21)**

(54) **Splash bar arrangement for a heat exchanger.**

(30) Priority: **15.03.84 US 590068**

(43) Date of publication of application:
**02.04.86 Bulletin  86/14**

(45) Publication of the grant of the patent:
**15.04.92 Bulletin  92/16**

(84) Designated Contracting States:
**CH DE FR GB LI NL SE**

(56) References cited:
**DE-A- 1 805 438         FR-A- 2 099 608
FR-A- 2 390 698         GB-A- 1 262 365
US-A- 3 222 040         US-A- 3 389 895
US-A- 4 020 130         US-A- 4 181 691**

**See also references of WO8504243**

(73) Proprietor: **OVARD, John C.
3465 Ridgeview Drive
Santa Rosa, CA 95404(US)**

(72) Inventor: **OVARD, John C.
3465 Ridgeview Drive
Santa Rosa, CA 95404(US)**

(74) Representative: **Blumbach Weser Bergen
Kramer Zwirner Hoffmann Patentanwälte
Sonnenberger Strasse 100
W-6200 Wiesbaden(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a splash bar assembly structure and a splash bar for a heat exchanger according to the first part of claim 1 or 3.

Such a splash bar assembly structure and splash bars are disclosed in US-A-4,020,130. In this prior art splash bars the horizontal perforate surface elements provide the main means for splash and mechanically induced liquid fragmentation and dispersion. An upper and a lower perforated surface element of a single splash bar are connected by an upwardly inclined elongated surface element termed vertical strip. Furthermore, there are lips or projections to provide strength and lateral stability to the outer edge of the perforate surface elements. In profile sections where these vertical surface elements and lips extend upward from the horizontal perforated surface elements, an open U-shaped channel is presented to falling liquid which can cause a portion of the liquid impacting the horizontal surface elements to be trapped in the trough thus formed. While this trapped liquid will eventually drain through the perforate surface element, the formation of thick liquid films on the horizontal surface element will severely diminish the effectiveness of splash induced liquid fragmentation. In addition some of this liquid will migrate down the longitudinal axis of the splash bar in the direction of gas flow. Further, liquid passing through the holes and/or overflowing the lips will continue their fall in the form of heavy streams as opposed to droplets. These factors have a negative impact on splash effectiveness and the uniformity of water distribution throughout the splash bar matrix area. The contact surface area and performance is reduced from what might otherwise be achieved.

The splash bar profiles disclosed in US-A-4,133,851 overcome the problems referred-to above to some extent by incorporating only one vertical perforate or imperforate surface element in the profile design and by positioning said vertical surface element as a rib parallel to the longitudinal axis of the bar either at the centerline, or at a single edge of the horizontal perforate surface. Further, the edges of both the vertical and horizontal surface element includes a bevel or skirt whose purpose is to direct any impinging liquid toward the adjacent horizontal surface element of the same bar, or a laterally below offset bar in the splash bar assembly matrix. This profile, while improving on the liquid splash and distribution problems noted above, still exhibits liquid film build up in certain areas and voids in the liquid distribution pattern. These effects are greatest when the vertical rip is located at the centerline of the profile. Beveled edges at the top of this vertical strip actually direct liquid away from the center of the splash bar thereby creating a small but distinct void in liquid distribution directly below the splash bar in this area. Further, these beveled edges make it physically impossible to perforate the horizontal surface close to the vertical strip thereby creating an imperforate area where liquid still accumulates, forming a thicker liquid film on the top surface which spreads outward from this area. In addition, the improvements of this profile achieves are obtained only with some compromise in structural strength. Vertical ribs and the beveled skirts provide some functional advantages as noted above, but also must be relied upon to provide structural strength and rigidity to the splash bar. Due to the shape and location of these elements, the profiles tought generally lack lateral strength and stability, if the transverse dimension of the horizontal perforate surface element between the vertical rib and opposite edge of the profile exceeds a nominal limit. The only ways to overcome this structural weakness is either to increase the thickness of the profile or to reduce the transverse dimension of the splash bar. Either of these solutions will result in a loss in performance or the ultimate use of more material to affect the desired heat transfer capability. Limiting the size of the bar in the transverse direction reduces the size of the horizontal perforate surface thereby reducing the effective surface available for fragmentation of liquid on a given bar.

From GB-A-1,262,365 there is known a crossflow cooling tower including a matrix of longitudinally extending splash bars each having a perforated upper central elongate perforated flat horizontal surface element and a pair of downwardly inclined elongate perforated surface elements along the lateral edges of said central element. The tower is operated by flowing air horizontally through said matrix and splashing warm liquid through said matrix vertically. The liquid falls on said central surface element where formation of a pool is intended, and flows down the lateral inclined surface elements so as to drop onto a splash bar below. The perforations of the surface elements are not arranged in staggered rows nor do they include semicircular holes. As explained above, this will produce voids in the distribution of the falling liquid.

While the differences in the various splash bar designs found in the prior art may appear subtle, those skilled in the art will recognize that the geometric shape and relative position of various elements are highly significant in terms of their impact on splash effectiveness, liquid distribution, fragmentation and gas distribution/energy losses as well as structural strength. These difficulties are magnified by the fact that a typical splash bar fill assembly area contains a large number of individual splash bars, each of which influences the liquid/gas dynamics and performance of its neighbors and the overall performance of the heat transfer unit as a whole which cannot be predicted from the performance capabilities of prior art designs. Further, the strength, durability and cost are major considerations that cannot be overlooked.

Accordingly, the problem of the invention is to provide a splash bar assembly structure or a splash bar for a heat exchanger which improves splash and fragmentation effectiveness by substantially increasing the liquid surface contact area of falling liquid.

The solution of this problem starts from the idea that by minimizing the build up of liquid film thickness on primary splash surfaces both heavy streams and voids in the distribution of the falling liquid can be reduced and the fragmentation of the liquid inpinging on the horizontal surface elements can be increased.

According to the invention, this objective is arrived at by a splash bar assembly structure or a splash bar showing the features of claim 1 or 3. Further developments of the invention are included in claims 2 and 4.

The splash bars of invention have the advantage that they promote uniformity in the distribution of both a liquid and gas on or near individual splash bars and throughout the fill matrix assembly area and increase liquid-gas contact time. Further the splash bars of the invention have an aerodynamically efficient profile such that they will provide intimate mixing of gas and liquid and minimum resistance to gas flow when it is oriented with the longitudinal axis parallel to the gas flow direction.

Another advantage of the invention is a substantial increase in the durability and structural strength of the splash bar in all directions when hanging in a grid support system and to provide a connection to the vertical elements of the supporting grids while minimizing interference with liquid distribution throughout the fill assembly matrix.

The splash bar member of the present invention creates substantially greater liquid fragmentation and hence greater liquid contact surface area than prior art splash bar configurations. This is accomplished by causing a larger percentage of the splash induced secondary droplets to again re-encounter the same splash bar at a different location. Equally important is the improvement in the extent and efficiency of splash induced fragementation obtained by minimizing the thickness of liquid films on splash inducing surfaces through the new and essentially constant geometric relationship between perforate and imperforate sections over the entire splash bar surface.

As in other prior art splash bar designs (e.g. FR-A-2,099,608, US-A-3,222,040 and 4,181,691) preferably the splash bar member of the invention has a second flat perforated lower surface element parallel to and in the same plane as the first lower surface element connected by a second elongated upwardly inclined surface element with the upper surface element. To further enhance splashing without impairing structural strength and rigidity, imperforate strips may be provided on said upper surface element along the longitudinal edge or edges thereof.

Embodiments of the invention are shown in the accompanying drawing wherein

Fig. 1 is an isometric view of a typical mechanical draft, crossflow water cooling tower cell,

Fig. 2 is an end view of a portion of the fill assembly area matrix showing the splash bar support grids and splash bars therein,

Fig. 3 is an isometric fragmentary view of the splash bar support grid with a splash bar lying therein,

Fig. 4 is a partial, end plan view showing the construction details of a splash bar of the preferred embodiment of the present invention,

Fig. 5 is an end view of the splash bar shown in Fig. 4 taken along line 5-5 in the direction of the arrows,

Fig. 6 is an enlarged plan view of a portion of the structure shown in Fig. 3 and delineated by line 6-6,

Fig. 7 is similar to Fig. 5, but illustrating an alternative embodiment of the present invention.

The invention is described in terms of its application to the mechanical draft crossflow cooling towers, but those skilled in the art will recognize its applicability to natural draft or hyperbolic cooling towers and other direct contact heat and mass transfer apparatus where gas and liquid flow in cross current relationship.

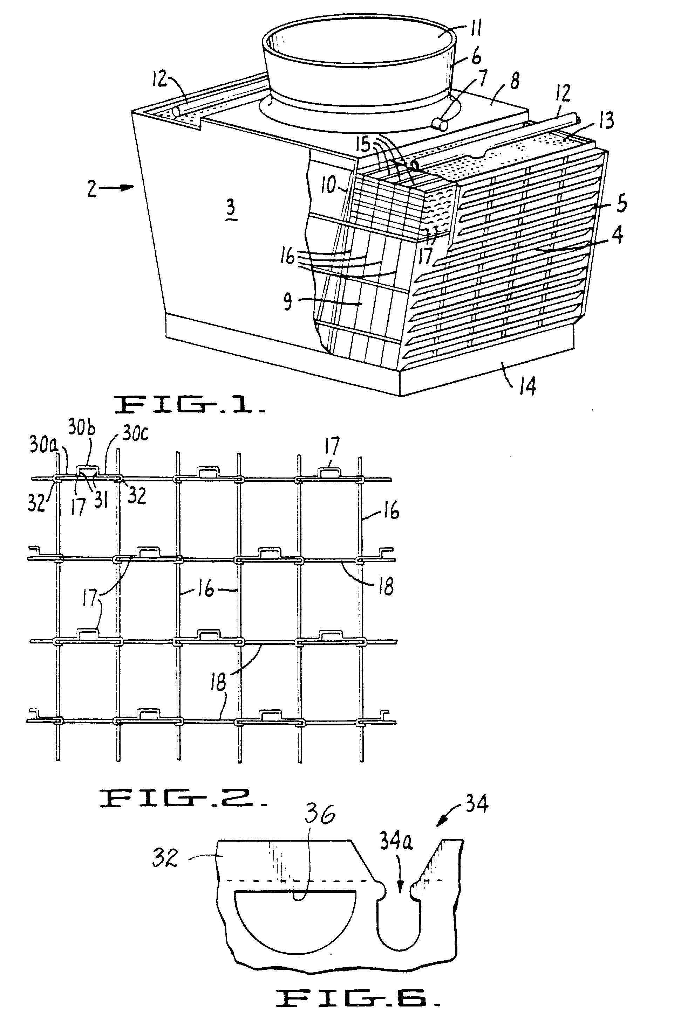

Fig. 1 illustrates a typical induced draft crossflow cooling tower 2 having two sides 3 closed and two sides 4 open with the open sides acting as the atmospheric air intakes for the cooling tower. The open sides are fitted with air intake louvers 5 whose primary purpose is to diminish the effects of high winds while keeping water contained within the tower during such occurances and during times when the fan is off. The cooling tower has the usual induced draft axial flow fan (not shown), fan shroud 6 and fan drive motor 7 located on the enclosed top deck 8; said induced draft fan draws air through the intake louvers 5 which then travels horizontally through the fill assembly area 9, through the drift elimination section 10, and finally is drawn vertically upward through the fan and is thereafter discharged at the top of the fan stack shroud 11.

The tower is equipped with the usual hot water distribution piping system 12 which distributes hot water to the hot water basin 13. Nozzles located in the floor of the hot water basin 13 spray and distribute water over the entire top of the fill assembly area 9 after which the water falls by gravity through the fill assembly area 9 being finally collected in the cold water basin 14 at the bottom of the tower.

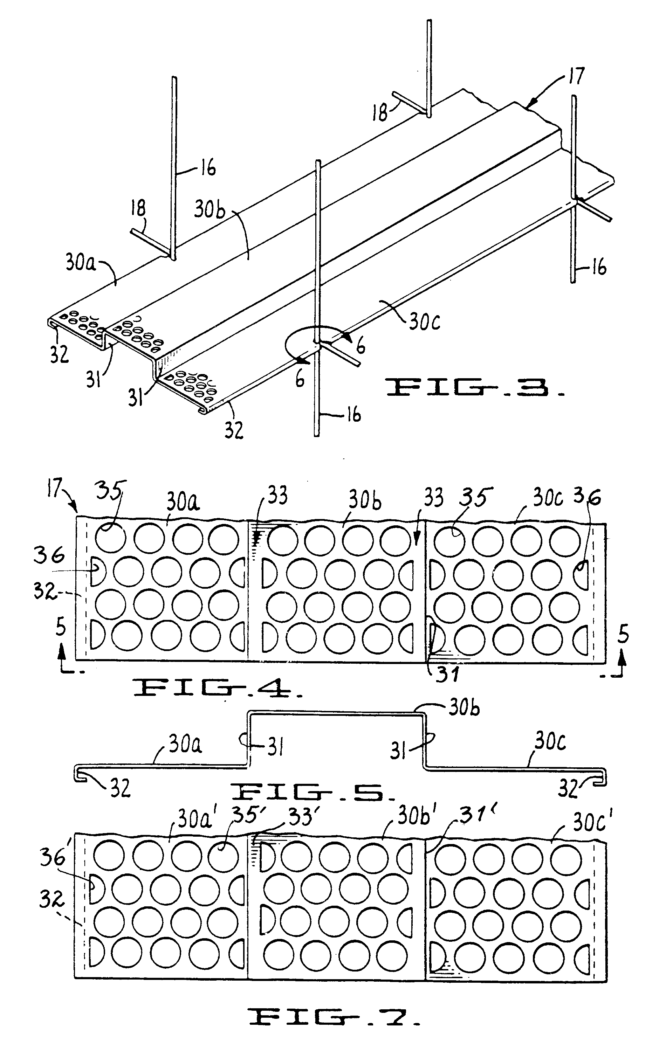

Referring to Fig. 2 and 3 in conjunction with Fig. 1 it is seen that the fill assembly area 9 is comprised of grid support beams 15 attached to the conventional cooling tower structure at the top and at intermediate heights as may be appropriate. Vertical support grid elements 16 are suspended from the support beams 15 and they in turn provide support for individual splash bar members 17 which are supported periodically along their length by horizontal grid elements 18. The splash bar members 17 are positioned in the support grid elements 16 in horizontal, spaced apart relationship in each row as shown in Fig. 2 with splash bars in adjacent rows located in offset relationship to splash bars in rows immediately above and below. Fig. 1 illustrates a fill assembly orientation where the splash bars are oriented with their longitudinal axis parallel to the direction of air flow.

A preferred embodiment of the splash bar members 17 of the present invention is illustrated in Figs. 3-5. The splash bar is composed of three horizontal, generally flat, elongated surface elements 30a, 30b and 30c having holes 35, 36 perforated therein. The surface elements are connected at their interior edges by a pair of elongated, generally vertical, flat surface elements 31 such that the center or upper flat perforate surface element 30b is elevated relativ to the two exterior or lower flat perforate surface elements 30a and 30c. An elongated, imperforate rolled lip 32 is attached to each extreme outward edge of said exterior lower surface elements 30a and 30c, which act to provide additional structural strength and stiffness to the transverse profile thus formed.

The holes 35, 36 in the surface elements 30a, 30b and 30c are circular (35) or semicircular (36) in shape and are positioned such that the geometric or circular centers of said holes 35, 36, for any three adjacent holes not all in a straight line, are located at the apexes of equilateral triangles. This pattern is repeated in both the transverse and longitudinal directions in each horizontal surface element thereby creating a uniform and equally spaced hole pattern in both directions. The holes 35, 36 are arranged in longitudinally extending rows and in transversely extending rows and are staggered relative to adjacent rows ("staggered rows"). When there is a semicircular hole 36 in a transversly extending row, the adjacent hole of the next row is a circular hole 35; i.e. the semicircular holes 36 are arranged in alternate rows. Semicircular holes 36 are employed in the lateral first and last rows extending longitudinally of the perforate pattern in each horizontal surface element to eliminate any imbalance in the ratio of perforate to imperforate surface area near the edges of the individual horizontal surface elements. This is particularly important near the intersection of horizontal surface elements 30a and 30c with the vertical connecting surface element 31, where a relatively large area of imperforate surface would otherwise occur and where a thicker liquid film would otherwise occur because flow of liquid laterally inward of the splash bar is prevented by the vertical surface elements 31. Said hole patterns in adjacent, horizontal surface elements are positioned symmetrically relative to a vertical plane, located in a small imperforated strip 33 parallel to, and slightly offset laterally inward of the vertical surface element 31. Without this specific offset, the pattern otherwise established would create a fully symmetrical and balance perforate pattern over the full width of the splash bar. This slight offset is incorporated in the perforate pattern specifically to create the small elongated imperforate strip 33 along the edges of the top horizontal surface element 30b thereby creating slightly more splash surface in this critical transition region between adjacent horizontal surface elements which are at different elevations, thereby eliminating any tendency for liquid to accumulate on the lower horizontal surface element adjacent to the vertical surface element 31 at the two locations where this transition occurs on the instant splash bar.

As best illustrated in Fig. 6, the splash bar members 17 have slots 34 cut into the extreme outward edges of the exterior surface elements 30a and 30c. The slots 34 are spaced apart along the length of the splash bar 17 by the distance between the grid elements 16 for locking the splash bars in place in the fill assembly 9. The slots narrow down approximately halfway along their length at 34a and are chamfered from the narrow region to the open end permitting the grid elements to slide into the slots 34 for capture beyond the narrow region.

The height of each surface element 31 is less than the width of any of the perforate surface elements 30a, 30b and 30c. In the preferred embodiment illustrated in the drawing the height of each surface element 31 is less than half the width of any of the perforate surface elements 30a, 30b and 30c.

An alternative embodiment of the present invention is illustrated in Fig. 7. As illustrated there, the hole pattern for the upper center surface element 30b' is shifted by one transversely extending row with respect to the hole pattern for the lower exterior surface elements 30a' and 30b' from that pattern shown in Fig. 5 so that the semicircular holes 36' of the upper surface element 30b' are immediately adjacent to full circular holes 35' in the lower surface elements 30a' and 30c'. This construction also reduces the liquid film thickness on the imperforate strip 33' that might run down the vertical surface elements 31' thereby creating a thick liquid film in the region adjacent to the closest full circle holes near the edge of the lower surface element.

In all embodiments the perforations or holes 35, 36 are positioned in a distinct and precise pattern wherein the solid material areas between adjacent perforations are of uniform size and shape and equally spaced in both transverse and longitudinal directions. Further, said hole patterns are also uniquely located to establish a symmetrical and generally uniform hole pattern relationship between adjacent horizontal perforate surfaces at different elevations that minimize the imperforate area immediately adjacent to the vertical connecting surface element where it intersects the lower horizontal surface element.

The heat exchanger is operated so as to cause a vertically falling liquid to encounter a central horizontal perforate surface element 30b which causes a portion of said liquid to be fragmented by splashing on the imperforate sections of said surface element, and the balance (the remainder) of said liquid to be fragmented by shear forces as it passes through the perforations of said surface. That portion of liquid passing through the top perforate surface element continues its fall until it encounters another splash bar. That portion of liquid having impinged on the solid sections of said central horizontal surface element 30b are shattered into smaller - secondary - droplets which are projected upward and outward from the point of impact. Said secondary droplets thereafter continue their fall, joining the as yet undisturbed droplets from above as they encounter either the same or laterally adjacent horizontal perforate surface elements where the same splash/shear fragmentation phenomenon is repeated. Liquid accumulating on horizontal surface elements is uniformly distributed, thereby minimizing the thickness of the liquid films and promoting an increased splash effectiveness on said surface elements. The symmetrical, balanced liquid dispersion pattern promotes uniform and intimate mixing of gas and liquid.

Specific fluids exhibit different viscosities and other physical characteristics which may require different hole sizes and shapes, different hole center distances and different overall transverse dimensions to obtain optimum results.

## Claims

1. Splash bar assembly structure for a heat exchanger having a hot water distributor for distributing water onto a splash bar assembly structure, a cold water basin and means for inducing movement of air therebetween, comprising
   a series of elongated generally horizontal splash bar members (17),
   means (15, 16, 18) supporting said splash bar members (17) in the space between the hot water distributor (13) and said cold water basin (14) in horizontal and vertical spaced relationship,
   said splash bar members (17) having their longitudinal axes positioned substantially horizontal,
   each of said splash bar members (17) having elongate substantially flat, perforated surface elements (30a, 30b, 30c) in parallel and vertically spaced apart relation, the perforations (35, 36) of said surface elements arranged in staggered rows,
   characterized in that
   said rows include semicircular holes (36) in alternate rows along the edges of said surface elements (30a, 30b, 30c) with the straight side of said semicircular holes (36) aligned with, and adjacent to said edges.

2. Splash bar assembly structure according to claim 1 wherein any upper surface element (30b) includes an imperforate strip (33) on said upper surface element (30b) along the longitudinal edge thereof.

3. Splash bar for a heat exchanger comprising a first upper elongate perforated flat horizontal surface element (30b), second (30a) and third (30c) lower elongate perforated, flat horizontal surface elements located respectively along the lateral edges of said first element (30b) and positioned substantially parallel to and vertically below said first surface element (30b), upwardly inclined fourth and fifth elongate surface elements (31) respectively connecting the elongate edges of said second (30a) and third (30c) surface elements to the transverse extreme edges of said first element (30b), the perforations of said surface elements (30b, 30a, 30c) arranged in staggered rows, characterized in that said rows include semicircular holes (36) in alternate rows along the edges of said perforated surface elements (30a, 30b, 30c) with the straight side of said semicircular holes (36) aligned with, and adjacent to said edges.

4. Splash bar according to claim 3 wherein the upper surface element (30b) includes an imperforate strip (33) on said upper surface element (30b) along the longitudinal edge thereof adjacent to any upwardly inclined surface element (31).

### Revendications

1. Structure d'un ensemble à barres d'éclaboussement pour un échangeur de chaleur comprenant un distributeur d'eau chaude pour distribuer de l'eau sur un ensemble à barres d'éclaboussement, un bassin d'eau froide et un moyen pour induire un déplacement d'air entre eux, structure comprenant une série de barres d'éclaboussement allongées globalement horizontales (17), des moyens (15, 16, 18) de support desdites barres d'éclaboussement (17) dans un espace compris entre le distributeur d'eau chaude (13) et ledit bassin d'eau froide (14) selon un espacement horizontal et vertical, lesdites barres d'éclaboussement (17) présentant des axes longitudinaux globalement horizontaux, chacune desdites barres d'éclaboussement (17) possédant des éléments de surface perforée allongés, globalement plats (30a, 30b, 30c) selon un espacement parallèle et vertical, les perforations (35, 36) desdits éléments de surface étant disposées selon des rangées en quinconce,

structure caractérisée en ce que lesdites rangées comprennent des trous semi-circulaires (36) dans des rangées alternées le long des bords desdits éléments de surface (30a, 30b, 30c), le côté droit desdits trous semi-circulaires (36) étant aligné avec et adjacent auxdits bords.

2. Structure d'un ensemble à barres d'éclaboussement selon la revendication 1, dans lequel tout élément de surface supérieur (30b) comprend une bande perforée (33) sur ledit élément de surface supérieur (30b) le long de son bord longitudinal.

3. Barres d'éclaboussement pour un échangeur de chaleur comprenant un premier élément de surface supérieur (30b) qui est allongé, perforé, plat et horizontal, des second (30a) et troisième (30c) éléments de surface inférieurs qui sont allongés, perforés, plats et horizontaux le long des bords latéraux respectifs dudit premier élément (30b) et placés globalement parallèles et verticalement en dessous dudit premier élément de surface (30b), des quatrième et cinquième éléments de surface (31) allongés et inclinés vers le haut raccordant respectivement les bords allongés desdits second (30a) et troisième (30c) éléments de surface aux bords transversaux extrêmes dudit premier élément (30b), les perforations desdits éléments de surface (30b, 30a, 30c) étant disposés selon des rangées en quinconce, barres d'éclaboussement caractérisées en ce que lesdites rangées comprennent des trous semi-circulaires (36) selon des rangées alternées le long des bords desdits éléments de surface perforés (30a, 30b, 30c), le bord droit desdits trous semi-circulaires (36) étant aligné avec et adjacent auxdits bords.

4. Barres d'éclaboussement selon la revendication 3, dans lesquels l'élément de surface supérieur (30b) comprend une bande perforée (33) sur ledit élément de surface supérieur (30b) le long de son bord longitudinal adjacent à un quelconque élément de surface (31) incliné vers le haut.

### Patentansprüche

1. Spritzblechanordnung für einen Wärmetauscher mit einem Heißwasserverteiler zur Verteilung von Wasser auf einer Spritzblechanordnung, ein Kaltwasserbehälter und eine Einrichtung zur Erzeugung von Luftbewegung dazwischen, mit folgenden Merkmalen: eine Serie von länglichen, im Großen und Ganzen horizontalen Spritzblechgliedern (17), eine Stützeinrichtung (15, 16, 18) für die Spritzblechglieder (17) im Raum zwischen dem Heißwasserverteiler (13) und dem Kaltwasserbehälter (14) hinsichtlich ihres horizontalen und vertikalen Abstandes, die horizontalen Achsen der Spritzblechglieder (17) sind im wesentlichen horizontal gelegen, jedes der Spritzblechglieder (17) weist längliche, im wesentliche flache perforierte Oberflächenelemente (30a, 30b, 30c) auf, die parallel und im vertikalen Abstand voneinander angeordnet sind, wobei die Perforation (35, 36) der Oberflächenelemente in versetzten Reihen angeordnet sind, dadurch gekennzeichnet, daß die Reihen halbkreisförmige Löcher (36) in abwechselnden Reihen entlang den Kanten der Oberflächenelemente (30a, 30b, 30c) umfassen, wobei die gerade Seite jedes halbkreisförmigen Loches (36) benachbart zu den Kanten liegt und zu diesen ausgerichtet ist.

2. Spritzblechanordnung nach Anspruch 1, dadurch gekennzeichnet, daß jedes oberes Oberflächenelement (30b) einen nichtperforierten Streifen (33) auf dem oberen Oberflächenelement (30b) entlang dessen Längskante aufweist.

3. Spritzblech für einen Wärmetauscher mit folgenden Merkmal: ein erstes oberes, längliches, perforiertes, flaches, horizontales Oberflächenelement (30b), ein zweites (30a) und ein drittes (30c) unteres, längliches, perforiertes, flaches, horizontales Oberflächenelement, die jeweils entlang den Seitenkanten des ersten Elements (30b) angeordnet sind und im wesentlichen parallel und vertikal unterhalb des ersten Oberflächenelementes (30b) sitzen, nach oben geneigte vierte und fünfte längliche Oberflächenelemente (31), die jeweils die Längskanten des zweiten (30a) und des dritten (30c) Oberflächenelementes mit den querliegenden, extremen Kanten des ersten Elementes (30b) verbinden, wobei die Perforationen der Oberflächenelemente (30b, 30a, 30c) in versetzen Reihen angeordnet sind, dadurch gekennzeichnet, daß die Reihen halbkreisförmige Löcher (36) in abwechselnden Reihen entlang den Kanten der perforierten Oberflächenelemente (30a, 30b, 30c) umfassen, wobei die gerade Seite der halbkreisförmigen Löcher (36) benachbart den Kanten liegen und zu diesen ausgerichtet sind.

4. Spritzblech nach Anspruch 3, dadurch gekennzeichnet, daß des obere Oberflächenelement (30b) einen nichtperforierten Streifen (33) auf dem oberen Oberflächenelement (30b) entlang dessen Längskante benachbart dem jeweils nach oben geneigten Oberflächenelement (31) umfaßt.

FIG.1.

FIG.2.

FIG.6.

FIG.3.

FIG.4.

FIG.5.

FIG.7.